Europäisches Patentamt

**European Patent Office**

**Office européen des brevets**

(19)

(11) Publication number: **0 047 807**
A2

(12) # EUROPEAN PATENT APPLICATION

(21) Application number: **80304279.5**

(22) Date of filing: **28.11.80**

(51) Int. Cl.³: **F 16 D 43/20**
**B 23 G 5/14**

(30) Priority: **12.09.80 US 186434**

(43) Date of publication of application:
**24.03.82 Bulletin 82/12**

(84) Designated Contracting States:
**AT BE CH DE FR GB IT LI LU NL SE**

(71) Applicant: **Tapmatic Corporation**
**1851 Kettering Street**
**Irvine California 92705(US)**

(72) Inventor: **Johnson, Allan S.**
**2018 Galaxy Drive**
**Newport Beach California 92660(US)**

(74) Representative: **Potter, Willoughby Whatnall et al,**
**ERIC POTTER & CLARKSON 14 Oxford Street**
**Nottingham NG1 5BP(GB)**

(54) Tapping attachment with improved torque release clutch.

(57) A torque release clutch is built into a tapping attach-
ment. Improvements are embodied in the torque release
clutch. Clutch members are provided including a first clutch
member and a second clutch member. The main biasing
spring acts on the first clutch member. When the clutch parts
are disengaged, the first member is moved against the
spring and held in an inactive position wherein it is
completely out of engagement with the teeth of the other
clutch member to eliminate wear. The second clutch mem-
ber is biased by a relatively light spring to provide just
enough engagement between the clutch faces so that upon
reversal such faces will re-engage.

FIG. 1

EP 0 047 807 A2

1

## "TAPPING ATTACHMENT WITH IMPROVED TORQUE RELEASE CLUTCH"

This invention is concerned with tapping attachments having a torque release clutch. The improvements of the invention reside primarily in a torque release clutch having this adaptation.

The herein inventor's prior U.S.A. Patent No. 3,472,347, discloses a built in clutch adapted for utilization in a tapping attachment. The clutch that is utilized in the herein invention is of the type shown in this inventor's prior U.S.A. Patent No. 3,472,347, and also in the inventor's prior U.S.A. Patent No. 3,791,756. Reference is also made to prior U.S.A. Patent Nos. 3,999,642; 4,014,421; 4,029,429; and 4,067,424.

The patents referred to constitute the most pertinent prior art within the knowledge of the herein inventor. The prior art built in clutch lacks a certain characteristic present in the improvement of the herein invention. Because of the relatively small size of the built in clutch, the spring which acts on one of the clutch members must be a relatively heavy spring. In the known devices, the clutch is disengaged and there is still some limited engagement between the teeth on the clutch members which may be in the amount of .015 to .020 thousandths. This engagement of the clutch faces is necessary to bring about re-engagement of the clutch on reverse rotation. This engagement, however, particularly in view of the relatively heavy spring, causes undesired wear to occur as between the teeth on the clutch faces. This disadvantage of the known prior art devices is overcome by the improvements of the herein invention.

- 2

The invention resides primarily in improvements in a torque release clutch. The parts of the cltuch are relatively of small size and the spring that acts on one clutch member is a relatively heavy spring.

Prior art clutches are illustrated in U.S. Patents Nos. 3,472,347, 3,791,756 and 4,067,424 which are hereby incorporated herein by reference. There is a first clutch member which is biased by relatively strong spring and which, upon disengagement of the clutch members, is moved into a lifted and held or parking position. This position in the herein invention is such that the clutch teeth on this part are fully out of engagement with the clutch teeth on the other part, so that the biasing spring is held in a fully inactive position. The clutch embodies a second member having clutch teeth. This member is constructed and arranged relatively with respect to the parts of the clutch and is associated with a light spring which biases it in a direction so that the teeth engage relatively lightly with the teeth on the other clutch member. This amount of engagement is not sufficient to occasion any significant wear, but it is sufficient so that upon reversed rotation, the clutch parts are again moved into clutching engagement.

In the light of the foregoing, the primary object of the invention is to improve the characteristic in a clutch to limit the degree of engagement between clutch faces or clutch teeth on the clutch parts when the clutch is disengaged, such as would cause excessive and undesired wear.

A further object is to realize the result set forth in the foregoing by way of a clutch design having first and second clutch parts, one part being biased by a spring and so arranged that when the clutch is disengaged, the first part is held in an inactive position wherein the biasing spring is inactive and the

3

teeth of clutch parts are not in engagement, the second clutch part being biased by relatively light spring enough to provide sufficient engagement between the clutch parts so that re-engagement will occur upon reverse rotation.

In the drawings:-

Figure 1 is a schematic view of a part of a machine carrying a tapping attachment embodying the invention;

Figure 2 is a cross-sectional view of a preferred form of the invention in a tapping attachment;

Figure 3 is a cross-sectional view taken along line 3-3 of Figure 2;

Figure 4 is a sectional view taken along the line 4-4 of Figure 2;

Figure 5 is a sectional view taken along the line 5-5 of Figure 2;

Figure 6 is an isometric view showing the upper clutch part;

Figure 7 is an isometric view showing the lower clutch parts;

Figure 8 is an exploded view of the clutch and related parts; and

Figure 9 is a cross-sectional view illustrating a modified form of the invention.

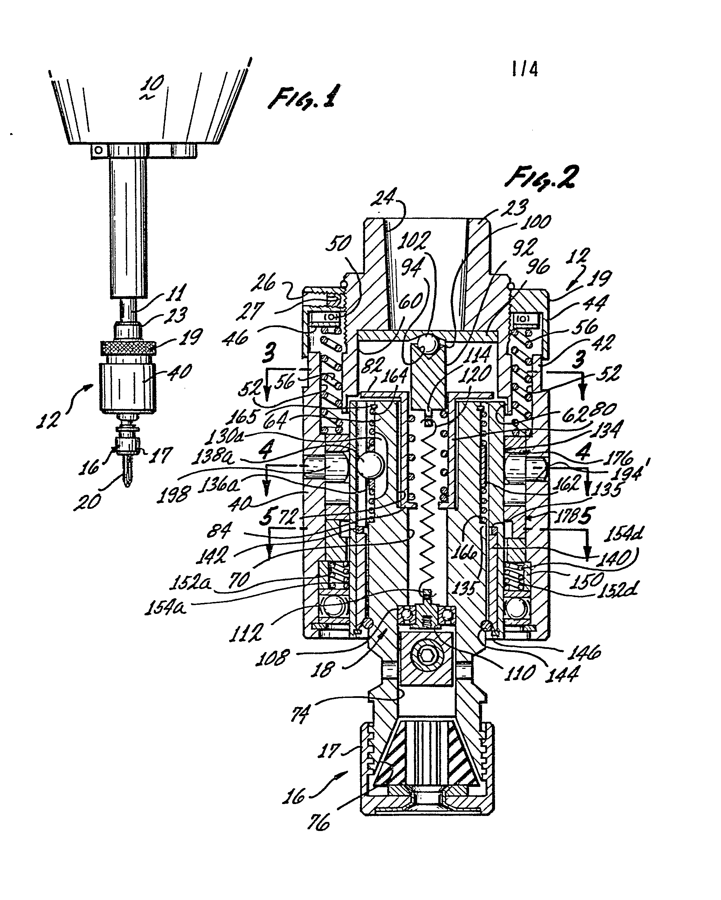

Referring now more in detail to the various figures of the drawings, numeral 10 designates a machine tool with which the attachment embodying the invention may be used. It has an arbor 11 and the tapping attachment is designated generally at 12. Numeral 16 designates the chuck on the tapping spindle 18 and the tap itself is designated at 20. Numeral 18 designates the driven spindle carrying tap chuck 16 and 17 nut which holds the tap 20. See Figure 1. The tap check nut 17 and tap 20 are conventional and may be like those shown in the earlier application and patents referred to.

Figure 2 shows the attachment 12 in cross-section.

4

The attachment has a cylindrical body 40 having an upwardly extending part 23 having external threads. The lower part is cylindrical and hollow as shown. The part 23 has a tapered bore 24 in which is received the end of the drive stem or spindle 11. Numeral 19 designates a knurled adjusting cap. The cap 19 is externally knurled as described and threads onto the part 23. The cap 19 has a radial bore 26 which is threaded to receive the lock set screw 27. The cap 19 cooperates with the clutch mechanism as will be described, for adjusting the amount of torque that can be transmitted.

The body of the tapping attachment is cylindrical as designated at 40. At the upper end there is a portion 42 of smaller diameter. The cap 19 has a skirt part 44 that fits down over the portion 42. Inside of the cap 19 is a thrust plate 46 and between this thrust plate and the inside surface of the cap 19 is a ball bearing 50.

The upper of the body 40 has a plurality of equally angularly spaced bores 52 as may be seen in Figure 3. In each of these bores is a coil spring, one of which is designated at 56 and all of these springs bear against the thrust plate 46, which with the bearing 50 forms a thrust bearing. The lower ends of these springs bear against the torque release clutch, as will be described.

As previously described, the cap 19 threads onto the part 23. The part 23 has a cylindrical bore 60 at the end of which is a counterbore 62.

The upper end of the spindle 18 is of smaller diameter, this part being designated by a numeral 64. The spindle 18 has a central bore 70 and at the upper end it has a counterbore 72. Below the bore 70 is a counterbore 74 and at the end of this counterbore is a tapered counterbore 76.

Within the bore 72 is a bushing 80 having a top flange 82 above the upper end of the spindle 18. The bushing 80 has an inside flange 84 at the bottom. The end of the bushing 80 rests against the square shoulder at the end of the bore 70. Within the bushing 80 is a coil spring 88, which serves a purpose which will be described in detail presently, but it may be said it allows a relative upward movement of the spindle 18.

Numeral 92 designates a guiding stem that extends into the inside of bushing 80. It has a conical notch or depression 94 at its upper end. Numeral 96 designates a plate fitting against the end of the counter bore 60 in the part 23 and it also has a corresponding recess 100 in it and positioned between this recess and the recess 94 is a ball 102. The purpose of the construction just described is to allow some lateral deviation of the spindle 18 although it is being guided, so as to compensate for any possible misalignment of the spindle and tap with the hole in the work.

At the lower end of the central bore 70 fitting against the square shoulder at the end of that bore in the end of counterbore 74 is a bearing 108 and rotatably carried in this bearing is a fitting or member 110 having an extending lug 112 with a hole in it. A similar lug 114 is provided at the lower end of the stem 92 and connected between the said lugs is a coil tension spring 120 which allows the spindle 18 to have a floating relationship.

Formed in the upper part 64 of the spindle 18 are axial grooves or cut-outs 130a, 130b and 130c having a shape as may be seen in Figure 4. These are for purposes of driving the spindle as will be explained presently.

Surrounding the spindle 18 and within the body 40 is a clutch sleeve 134, which is cylindrical and which has an intermediate internal annular shoulder 135. On the inside of the upper part of the clutch sleeve 134 are

6

provided splines as shown at 136a, 136b and 136c. The spaces between the splines are shaped as may be seen in Figure 4. Positioned in the axial cutouts 130a, 130b and 130c are balls 138a, 138b, and 138c, which can also engage in the spaces between the splines 136a, 136b, and 136c and can engage with the splines so that the clutch sleeve 134 can drive the spindle 18.

Surrounding the lower part of the spindle 18 is a bushing 140 and between the top end of this bushing and the shoulder on the sleeve 134 is a ring 142. The lower end of the bushing 140 is tapered as shown and between this taper and a part of the spindle 18 is a ring as shown at 144. Numeral 146 designates a snap ring at the lower end of the bushing 140.

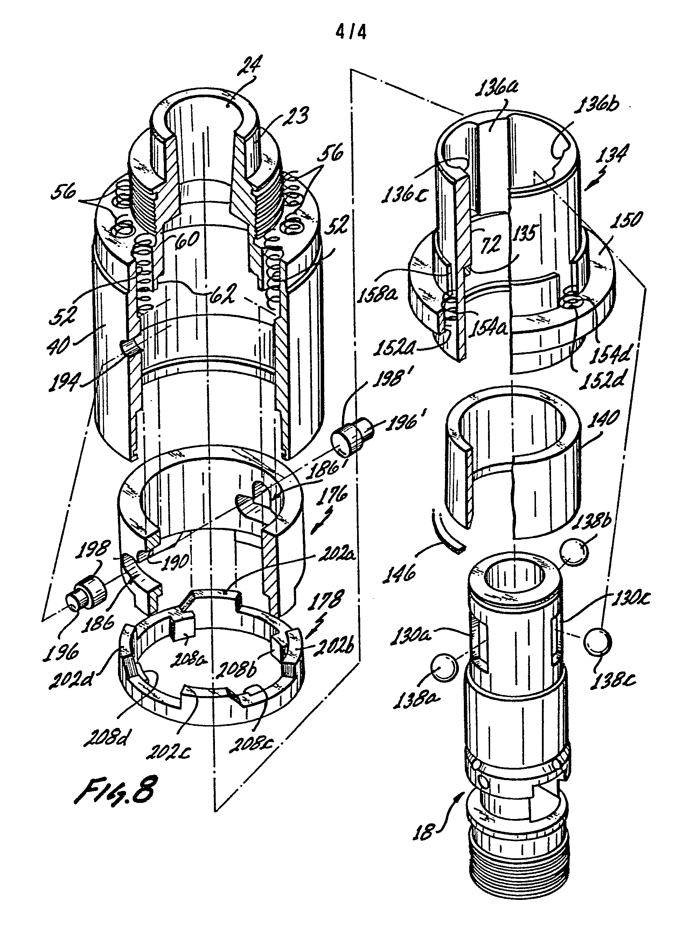

The clutch sleeve 134 has an extending bushing, as designated at 150 having in it holes as designated at 152a, 152b, 152c and 152d for springs 154a, 154b, 154c and 154d which act on the lower clutch member as will be described. See Figure 8. Aligned with the holes, the clutch sleeve has axial slots as designated at 158a, 158b, 158c and 158d in which the lower clutch member can move, as will be described.

Numeral 162 designates a ring in which the balls 138a, 138b, and 138c are carried. This ring is positioned between two springs. One spring 164 is above it, surrounding the spindle 18 and held by a snap ring 165. The spring 166 below the ring 162 has its lower end against the shoulder 135 on the spindle 18. The drive of the spindle is transmitted through the balls from the clutch assembly, as will be described presently and is as shown in Patent No. 3,946,884 which is hereby incorporated herein by reference.

The relationship in which parts are assembled will be understood from the various views, particularly the cross-sectional view Figure 2, the exploded view Figure 8

7

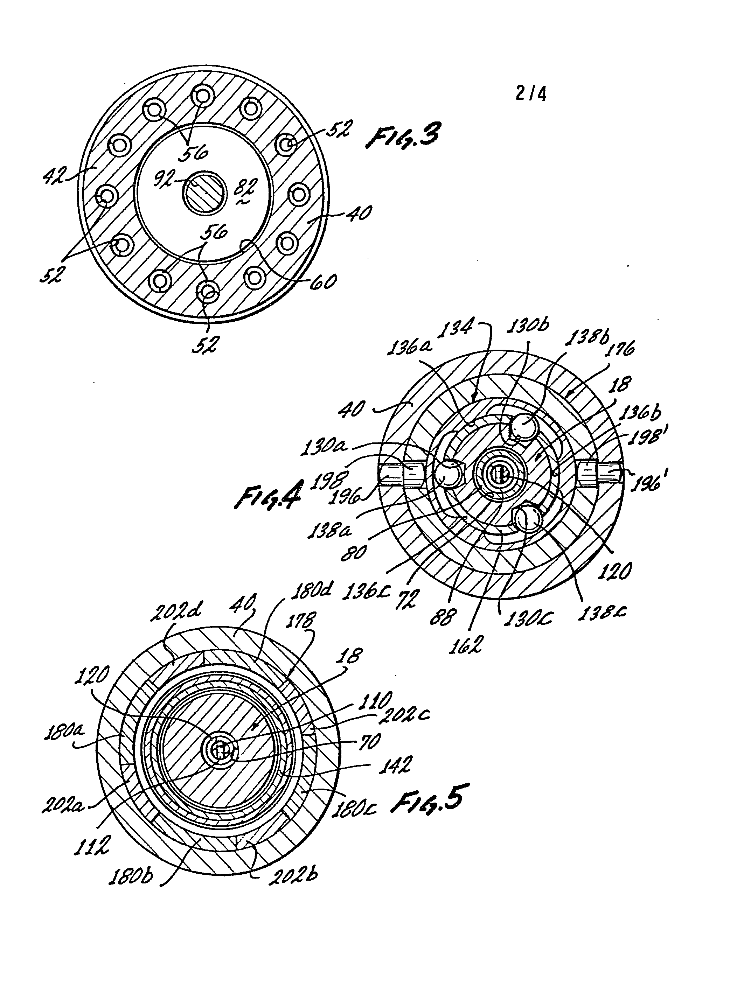

and the detail views Figure 3 - 7. The upper clutch member is identified by the numeral 176 and the lower clutch member is identified by the numeral 178. As may be seen in the exploded view, the lower clutch member 178 surrounds the clutch sleeve 134 and it rests on the springs 154. The upper clutch member 176 is positioned over the lower clutch member 178, the upper clutch member bearing against the previously described springs 56. In operation, as will be described, rotary drive is transmitted to the upper clutch member and to the lower clutch member and then through the ball drive by way of the balls 138 and the spindle 18.

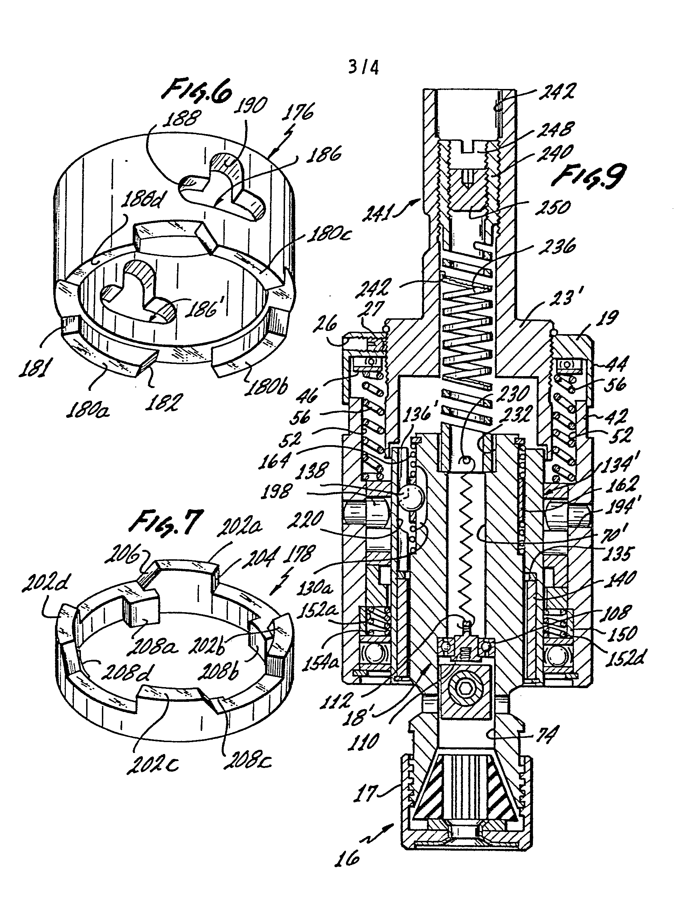

The upper clutch member 176 is cylindrical as may be seen in Figures 6 and 8. On its lower side are provided a group of four equally angularly spaced driving lugs; as designated by the numerals 180a, 180b, 180c and 180d with spaces in between them, as may be seen. Referring to the lug 180a, at one end it has a flat radial configuration as designated at 181 and at the opposite end, the end forms a slanting ramp, as designated at 182 which is at a slat relative to the circular direction of travel. All of the driving lugs are alike.

The upper clutch member 176 has similar openings in opposite sides diametrically opposed to each other. One of these openings is designated at 186. It has a circumferential portion 188 at the mid point of which is an axial lobe 190. The opening on the opposite side is designated at 186' and since it is like the opening 186 it need not be described in detail. The purpose of these openings will be referred to presently.

In the sides of the body 40 are diametrically opposed radial openings 194 and 194' and positioned in these radial openings are roller pins 196 and 196' having on them rollers designated at 198 and 198' which cooperate with the previously described openings 186 and 186' as

- 8 .

will be described presently. See Figures 2 and 8.

The lower clutch member 178 is cylindrical as shown in Figure 7 and 8. On its top side it has four driving lugs as designated at 202a, 202b, 202c, and 202d, which cooperate with the driving lugs on the lower side of the upper clutch member 176. Referring to the driving lug 202a, it is arcuate conforming to the circular configuration of the clutch member 178. At one end it has a flat radial surface 204 and at the other end formed a ramp or slanting surface 206, which can cooperate with one of the slanting surfaces 182 on one of the driving lugs of the upper clutch member 176.

On the inside of the lower clutch member 178 are four equally angularly spaced lugs or projections as designated at 208a, 208b, 208c and 208d. In operation, as will be described, these lugs can come into engagement with the axial slots 158 in the clutch sleeve 134 for driving it, as will be described.

Next will be described the operation of the attachment and particularly the torque release clutch. . In operation, when the tapping attachment is rotated by the machine, rotary drive is transmitted through the torque release clutch to the spindle 18. Normally, the springs 56 are acting on the upper clutch member 176. Normally, the rollers 198 and 198' on the drive pins 196 and 196' are positioned in the axial lobes 190 and 190' of the openings 186 and 186' of the upper clutch member. The upper and lower clutch members are in a relative position with the driving lugs on the upper clutch member with the respective slanting or ramp surfaces 182 in engagement with the respective ramps or slanting surfaces on respective driving lugs of the lower clutch member 178. The lower clutch member 178 is thus being driven.

Its inner lugs 208 are engaged in the axial slots 158 in clutch sleeve 134 to transmit rotation to it. The

.9

splines 136, as previously described, engage with the driving balls 138 which are in engagement with the axial slots 130 so that drive is transmitted to the spindle 18. As previously described, the drive balls 137 are between springs on the driving spindle, this construction being like that of Patent No. 3,999,642, which is hereby incorporated herein by reference.

In the event that the spindle should meet predetermined rotational resistance, the torque release clutch comes into play. Lugs on the upper clutch member having their ramp surfaces engaged with the ramp surfaces of the lugs 202 on the lower clutch member cause the upper clutch member 176 to be lifted against the force of the loading springs 56 and the upper clutch member 176 is lifted so that the rollers 198 and 198' come down into the circumferential part of the openings, that is, the slots 188 and 188' so that the upper clutch member 176 is now held in its lifted position against the force of springs 56 so that rotation is not transmitted to the lower clutch member 178 and no drive is transmitted to the spindle 18. At this time the springs 154 are acting upwardly on the lower clutch member 178 so that there is a desired limited amount of engagement between the lugs on the upper and lower clutch member 176 and 178 respectively. If the tapping attachment is now reversed in rotational direction, the flat radial surfaces of the respective driving lugs on the upper clutch member 176 and 178 will come into engagement so that relative motion will be transmitted to the upper clutch member 176. As soon as the drive rollers 198 and 198' come into line with the lobes 190 and 190' of the openings 186 and 186', the upper clutch member will move downwardly under the influence of the springs 56 to bring about full engagement between the driving lugs 180 on the upper clutch member 176 and the driving lugs 202 on the lower

10

clutch member 178. That is the respective radial surfaces, the lugs on the two clutch members will come into engagement and the tapping attachment will now drive the spindle 18 in the reverse direction to retract it from the tap hole.

Figure 9 of the drawings shows a modified form of the invention. The modification of Figure 8 is in most respects similar to that of the previous embodiment and operates similarly except that it has additional features as now to be described.

Parts that are the same as in the previous embodiment are identified by the same reference characters. Parts that are similar but that embody a modification are identified by similar reference characters primed. In Figure 9 the spindle is identified by the numeral 18'. The drive of the spindle is modified in the following respects. The clutch sleeve 134' and axial splines with spaces in between them are as in the previous embodiment. One of the splines is designated at 136' in Figure 8. At an intermediate point of each spline, as shown in Figure 8, there is provided an interruption as designated at 220. These interruptions in the splines enable operation as follows. During operation, while the tapping attachment is driving the spindle 18', the spindle is progressing downward relatively as it taps into the hole. When the drive ball 138 reach the interruptions 220 drive of the spindle is discontinued. The point at which this occurs may of course be a desired predetermined one. At the point, the attachment may be bodily raised while the spindle 18' remains in the same position so that the drive balls 138 are now brought into relationship with the portion of the spline which is below the interruptions 220. The attachment can now be driven in the reverse direction and the spindle 18' will be driven in the same manner but in a reverse direction so that the tap is

11

backed out of the hole that it is in. This portion of the apparatus is like Patent No. 4,014,421, which is hereby incorporated herein by reference.

As previously described in the previous embodiment, protection was provided in the event the spindle could not move any farther by allowing it to move upwardly against the bushing 80 biased by the spring 88. In the modification of Figure 9, this type of protection is provided by way of a modified structure. In this modification the feature is also present of there being clearance provided for the spindle 18' to compensate for any slight misalignment between the tap hold and the axis of the spindle.

In the modification of Figure 9, the spindle has a bore identified by the numeral 70' and a counterbore in which is the bearing 108 with fitting 110 connected to spring 120'. The upper end of this spring engages pin 230 which will be referred to again presently.

At the upper end of the spindle 18 is a counterbore 232. The spring protection is provided by a spring designated by the numeral 236 which is machined in one piece, the upper end forming a threaded part 240 which is both internally and externally threaded as shown in Figure 9.

In the embodiment of Figure 9 the part 23' has an upwardly extending shank part 242 having a bore 242' including a threaded part as shown. At its upper end it has a core 242" to receive the shank 11. The upper cylindrical part 240 is notched as shown at 248 to receive an adjusting screw and in the threaded bore in the upper part 240 is a nut 250 which can be adjusted.

From the foregoing, those skilled in the art will readily understand and appreciate the variations in the modification of Figure 9, with respect to the previous modification.

From the foregoing, those skilled in the art will

12

readily understand the nature and construction of the invention and the manner of its operation and utilization as well as the manner in which all of the objects as set forth in the foregoing are realized.

The foregoing disclosure is representative of a preferred form of the invention and it is to be interpreted in an illustrative rather than a limiting sense, the invention to be accorded the full scope of the claims appended hereto.

13

CLAIMS.

1. An adjustable torque clutch adapted for providing driving engagement between a driving shaft and a driven shaft, the clutch comprising a first element carried by one of said shafts and axially movable relative thereto, a second element carried by the other shaft and axially movable relative thereto, means axially biasing the said first element, the said elements being interengageable to transmit torque from one shaft to the other, the said elements having mutually engageable surfaces constructed whereby when torque is transmitted through the elements, the said first element tends to move axially in a direction to disengage the elements, characterised by the provision of holding means whereby upon predetermined axial movement of the first element, the holding means is in an axial position wherein said biasing means is held in a fixed position thereby, and means positioned to act on the second element to urge said element in a direction to provide for a limited amount of engagement between the first and second elements when they are disengaged for purposes of transmitting torque, said holding means comprising members engageable with openings in said first element.

2. An adjustable torque clutch according to Claim 1 characterised by the provision of a sleeve member carried by one of the said shafts, the said member having a radial projection means cooperable with openings in said first element whereby said element can be held in an axial inactive position.

3. A torque clutch as in Claim 1 or 2 characterised in that said first element has opening means in it, the opening means having an axial portion and circumferential portion, said radial projection means being adapted for engagement in the slot means to hold the first element in an inactive position.

14·

4. A torque release clutch as in any of the Claims 1-3 characterised in that the means positioned to urge said element include a relatively light biasing spring positioned to act on said second element in a manner whereby the clutching surface of said element is in limited engagement with the clutching surface of the first element.

5. A torque clutch according to any of the preceding claims characterised in that said first element comprises a first clutch drive member, said first clutch drive member includes a first clutching surface and further includes a second clutch member, said second clutch member includes a second clutching surface whereby said first and second clutching surfaces are in limited engagement when said first and second clutching members are disengaged for purposes of transmitting torque.

6. A torque clutch according to Claim 5 characterised in that said first clutch member comprises a generally cylindrical configuration including a cutout portion defining said first clutching surface and wherein said second clutch member comprises a generally cylindrical configuration including a cutout portion defining said second clutching surface, said surfaces having portions constructed for limited engagement when the first clutch member is held in its disengaged position.

7. A tapping attachment comprising in combination, an attachment body, and a relatively rotatable spindle carried by the body and movable axially relatively thereto, characterised in that the spindle is received axially within the body, the body and spindle being constructed to provide clearance to allow a limited amount of lateral movement of the spindle and the body for normally centering the spindle with respect to the body.

8. A tapping attachment according to Claim 7 characterised in that the spindle includes means providing an axial bore, a centering stem positioned in the bore and a centering member positioned between the said stem and a part of the body.

9. A tapping attachment according to Claim 7 or 8 characterised by the provision of guide means interposed between the spindle and the body for normally guiding the spindle relative to the body, and resilient means having a position between the spindle and the body whereby upon the spindle encountering a predetermined axial resistance, relative axial movement is permitted by the resilient means as between the spindle and the body.

10. A tapping attachment according to Claim 1 characterised in that the body and spindle are constructed to provide clearance therebetween allowing limited lateral movement of the spindle, the said resilient means including a part having engagement with the spindle whereby normally to guide and centre the spindle.

Fig.1

Fig.2

2/4

FIG.3

FIG.4

FIG.5

0047807

3/4

FIG.6

188  190  176
186
188d
186'
180c
180d
181  180a  182  180b

FIG.7  202a
206  204 178
202d
208a 202b
208d 208b
202c  208c

FIG.9
242
248
240
250
236
241
242
26  27  23'  19
46  44
56  56
52  230  42
164  232  52
138  136'  134'
198  162
220  194'
70'
130a  135
152a  140
154a  108
150
112  152d
18'
110  74
17
16

*FIG.8*